# EUROPÄISCHE PATENTSCHRIFT

(11) **EP 1 975 490 B1**
(45) Veröffentlichungstag und Bekanntmachung des Hinweises auf die Patenterteilung: **01.08.2012**
(21) Anmeldenummer: 08002570.3
(22) Anmeldetag: 12.02.2008
(51) Int. Cl.: F16L 55/035, F16L 3/10, F16L 3/22, F16L 3/237, H02G 7/05

(54) **Vorrichtung zum Halten wenigstens eines langgestreckten Bauteils**
Device for holding at least one extended component
Dispositif destiné à maintenir au moins un élément allongé

(30) Priorität: 30.03.2007 DE 202007004729 U
(43) Veröffentlichungstag der Anmeldung: 01.10.2008
(73) Patentinhaber: Anvis Deutschland GmbH, 36396 Steinau an der Strasse (DE)
(72) Erfinder: Nagy, Attila, 1078 Budapest (HU); Noll, Alexander, 63628 Bad Soden-Salmünster (DE)
(74) Vertreter: Schmid, Nils T.F.

(56) Entgegenhaltungen:
- EP-A1- 1 544 532
- EP-A2- 1 058 040
- WO-A1-2006/011031
- FR-A1- 2 790 535

## Beschreibung

Die Erfindung betrifft eine Vorrichtung zum Halten wenigstens eines langgestreckten Bauteils, wie eines Rohres, insbesondere eines Hydrauliksystems, an einer im Betrieb Schwingungen ausgesetzten Tragstruktur, wie einer Fahrzeugkarosserie.

Die oben genannte bevorzugte Haltevorrichtung soll vorzugzugsweise für Leitungen eines Hydrauliksystems in der Kraftfahrzeugtechnik eingesetzt werden, insbesondere für das sogenannte ARS-System, das hydraulisch betrieben wird. Dieses System fordert zwei neben einander laufende Hydraulikleitungen, die schwingungsentkoppelt an der Karosserie des Kraftfahrzeugs angebunden werden sollen. Um die Montage zu vereinfachen, ist es notwendig, die Abstände zwischen den Hydraulikleitungen so wenig wie möglich festzulegen, damit große Montagetoleranzen zur Verfügung stehen, die an Ankoppelungsstellen der Hydraulikleitungen eine zuverlässige Abdichtung erleichtern.

Aus der gattungsbildenden WO2006/011031 A1 ist eine Halterung zur schwingungsisolierenden Befestigung von Rohrleitungen in Kraftfahrzeugen mit einem umlaufenden Rahmen aus zwei aneinander fügbaren Schalen bekannt, die einen Elastomerkörper aufnehmen. Die Elastomerkörper bilden beim Aneinanderlegen zwei axiale Durchgänge.

Eine andere Befestigungseinrichtung für Rohrleitungen in Kraftfahrzeugen offenbart die ebenfalls gattungsbildende FR 2 790 535 A1. Diese bekannte Befestigungseinrichtung weist zwei an einem Filmscharnier verbundene Schalenteile auf, in denen Elastomerkörper zur Begrenzung eines axialen Durchgangs für eine Leitung vorgesehen sind.

Es ist Aufgabe der Erfindung, eine Vorrichtung zum Halten wenigstens eines langgestreckten Bauteils an einer im Betrieb Schwingungen ausgesetzten Tragstruktur zu schaffen, mit dem eine einfache Montage des langgestreckten Bauteils bei Gewährleistung einer ausreichenden Dimensionstoleranz und Schwingungsentkopplung zugelassen ist.

Diese Aufgabe wird durch die Merkmale von Anspruch 1 bzw. Anspruch 2 gelöst. Danach besteht die Vorrichtung ausschließlich aus einem umlaufenden Rahmen, der zwei Schalenteile aufweist, von denen eine an der Tragstruktur befestigbar ist und die zur Bildung des Rahmens fest aneinander fügbar sind, und einer Elastomerkörpereinheit. Die Elastomerkörpereinheit soll erfindungsgemäß wenigstens einen axialen Durchgang zur Aufnahme des wenigstens einen langgestreckten Bauteils definieren. Die Elastomerkörpereinheit ist von dem Rahmen in Radialrichtung umgeben. Zur Bildung der Elastomerkörpereinheit nimmt jede Schale ein Elastomerteil auf. Die beiden Elastomerteile sind dabei so ausgestaltet, daß der Durchgang im Verlauf dessen gesamten Axialrichtung von den wenigstens beiden Elastomerteilen im aneinandergefiigten Zustand der Schalenteile begrenzt ist.

Mit der erfindungsgemäßen Haltevorrichtung ist es möglich, ein einfaches toleranzreiches Montieren von langgestreckten Bauteilen, wie Hydraulikleitungen, an die Fahrzeugkarosserie zuzulassen, wobei eine optimale Schwingungsentkopplung und ein sicherer Halt gewährleistet sind. Aufgrund der Zweiteiligkeit des Rahmens und der Elastomerkörpereinheit ist eine umweltschonende Bauweise realisierbar, weil ein chemisches Haftmittel zum Befestigen der Elastomerkörpereinheit an den Rahmen entbehrbar ist. Dies kann beispielsweise dadurch erzielt werden, daß die Elastomerkörpereinheit, nämlich die beiden Elastomerteile, beim Aneinanderfügen der Schalenteile komprimiert werden, wodurch eine Reibhaftung zwischen dem in den Flächen des Rahmens und den Außenflächen der Elastomerkörpereinheit hervorgerufen wird. Des weiteren erlaubt die Zweiteiligkeit der Haltevorrichtung bestehend ausschließlich aus einem Rahmen und einer Elastomerkörpereinheit, daß die Haltevorrichtung als Baukastensystem fungieren kann, bei dem zu einem bestimmten ersten Rahmenteil mit erstem Elastomerteil unterschiedliche zweite Rahmenteile mit unterschiedlichen zweiten Elastomerteilen kombiniert werden können, um die Haltevorrichtung für verschiedene langgestreckte Bauteile einfach anpassen zu können. Dabei können unterschiedliche Haltevorrichtungen geschaffen werden, die Leitungen mit Durchmessern von 10 bis 12 mm ohne weiteres aufnehmen können, wobei nur unter Umständen ein Schalenteil auszutauschen ist.

Vorzugsweise werden für die Elastomerkörpereinheit Materialen eingesetzt, die zur Schwingungsentkopplung besonders geeignet sind. Insofern stellt die erfindungsgemäße Haltevorrichtung eine Schwingungsentkopplung zwischen der im Betrieb ausgesetzten Tragstruktur und dem zu haltenden langgestreckten Bauteil dar. Aufgrund des die Elastomerkörpereinheit umgebenden Rahmens ist weiterhin gewährleistet, daß der Haltevorrichtung eine lange Dauerhaltbarkeit verliehen wird, weil der Rahmen die Schwingungen aufnehmende Elastomerkörpereinheit vor äußeren Einflüssen, wie Schlägen oder ätzenden Fluiden, zumindest teilweise schützt.

Bei einer bevorzugten Ausbildung der Erfindung bilden die Elastomerteile jeweils eine Fügefläche, und die Fügeflächen liegen im aneinandergefügten Zustand der Schalenteile formkomplementär aneinander. Dabei definieren vorzugsweise die Elastomerteile im aneinandergefügten Zustand der Schalenteile ein Grenzfuge, die sich quer durch die Elastomerkörpereinheit erstreckt.

Vorzugsweise mündet die Grenzfuge an zwei Wandstellen des Durchgangs. Dabei liegen die beiden Wandstellen des Durchgangs in einem Umfangsabstand von weniger als 180°, vorzugsweise zwischen 30° und 150°.

Mit der Anordnung eines "größeren" Elastomerteils, das heißt zum Umgreifen des langgestreckten Bauteils mit einem weiteren Umfang, als das radial gegenüberliegende Elastomerteil wird verhindert, daß sich das langgestreckte Bauteil in die Trennfuge eingraben kann. Insbesondere ist die Haltevorrichtung derart bezüglich der Tragstruktur auszurichten, daß die Hauptbelastungsrichtung im wesentlichen mittig auf das größere Elastomerteil ausgerichtet ist.

Bei einer bevorzugten Ausführung der Erfindung ist der Durchgang zumindest abschnittsweise, insbesondere im axialen Verlauf des Durchgangs abwechselnd, von einem der beiden Elastomerteile dominant begrenzt. Bei einer Weiterbildung der Erfindung bildet das eine Elastomerteil einen ersten Axialabschnitt des Durchgangs in einem Umfangsbereich von mindestens 210° bis 330° und insbesondere einen zweiten Axialabschnitt in einem Umfangssbereich von 30° bis 150°, vorzugsweise 90°. Das andere Elastomerteil bildet den ersten Axialabschnitt des Durchgangs in einem Umfangsbereich von mindestens 30° bis 150°, vorzugsweise 90°, und insbesondere den zweiten Axialabschnitt in einem Umfangsbereich von 210° bis 330°.

Bei einer bevorzugten Ausführung der Erfindung erstrecken sich in der Umfangsrichtung des Durchgangs aneinanderliegende Ränder einer Grenzfuge der Elastomerteile längs des gesamten Durchgangs, wobei die Ränder eines ersten axialen Abschnitts des Durchgangs insbesondere diametral umfangsgesetzt zu den Rändern eines zweiten an den ersten axial anschließenden Axialabschnitt verlaufen. Mit dieser diametral umfangsversetzten Anordnung der Ränder des ersten und zweiten axial zueinander angeordneten Axialabschnitts wird es möglich, unabhängig von der Belastungsrichtung das Eingraben der langgestreckten Leitung in die Trennfuge der Fügeflächen der Elastomerteile zu verhindern.

Bei einer bevorzugten Ausführung der Erfindung verlaufen die Ränder im Verlauf des ersten und/oder des zweiten Axialabschnitts im wesentlichen axial. Dabei können die Ränder im Verlauf eines den ersten und den zweiten Axialabschnitt axial verbindenden Übergangsabschnitts eine erheblich größere Radialrichtungskomponente als eine Axialrichtungskomponente, insbesondere eine reine Radialrichtungskomponente, aufweisen. Auch dieser spezifisch ausgebildete Übergangsabschnitt vermeidet den Eingrabeeffekt des langgestreckten Teils in die Trennfuge zwischen Fügeflächen der Elastomerteile.

Um das Halten des langgestreckten Bauteils innerhalb der Haltevorrichtung zu optimieren, kann zumindest ein Axialabschnitt des Durchgangs mit wenigstens einer Ringnut zur Bildung wenigstens zweier durch die Ringnut axial begrenzter, ringförmiger Haltelippen für einen sicheren Umgriff des langgestreckten Bauteils versehen sein, die insbesondere von beiden Elastomerteilen gebildet sind.

Bei einer besonders bevorzugten Ausführung der Erfindung sind in der Elastomerkörpereinheit zwei im wesentlichen parallele axiale Durchgänge ausgebildet. Dabei kann eine Trennfugenfläche zwischen den Elastomerteilen zu einer radialen Mittelachse der Halterung, welche Mittelachse sich windschief zu den beiden axialen Durchgängen erstreckt, im wesentlichen punktsymmetrisch geformt sein. Dabei kann die zugeordnete Trennfugenfläche des anderen Elastomerteils spiegelsymmetrisch dazu ausgebildet sein.

Bei einer bevorzugten Weiterbildung der Erfindung sind die Schalenteile lösbar aneinander befestigt.

Die erfindungsgemäße Haltevorrichtung kann beispielsweise einen Schnappmechanismus zum Befestigen der Schalenteile aneinander aufweisen. Dabei kann der Schnappmechanismus ein elastisch verformbares Eingriffsteil, das an einem Schalenteil befestigt ist, und eine Aufnahme aufweisen, in die das Eingriffsteil zum Befestigen der Schalenteile lösbar schnappen kann. Mit dieser bevorzugten Ausführung ist eine besonders einfache Montage hinsichtlich der Aufnahme der langgestreckten Bauteile erzielbar, ohne Spezialwerkzeug verwenden zu müssen.

Bei einer bevorzugten Ausführung der Erfindung weißt die erfindungsgemäße Haltevorrichtung einen Rahmen auf, der im wesentlichen ein Quaderform mit zwei in Axialrichtung des Durchgangs offenen Seiten aufweist, durch die sich das wenigstens eine langgestreckte, in dem wenigstens einen Durchgang aufgenommene Bauteil hindurch erstreckt. Auf diese Weise ist ein einfacher raumsparender Einbau oder Anbau der Haltevorrichtung im Bereich der Fahrzeugkarosserie möglich. Dabei kann jeweils ein Schnappmechanismus auf zwei insbesondere geschlossene, sich gegenüberliegende Rahmenseiten angeordnet sein. Auf diese Weise sind eine symmetrische Befestigung der Rahmenteile aneinander und unter Umständen eine symmetrische Einpressung der Elastomerkörpereinheit innerhalb des Rahmes möglich.

Um die Befestigungskräfte zwischen den Rahmenteilen zu erhöhen, kann vorzugsweise ein Spanneinrichtung für die beiden aneinandergefügten Schalenteile vorgesehen sein. Die Spanneinrichtung kann vorzugsweise Spannkräfte windschief zur Längsachse des wenigstens einen axialen Durchgangs zwischen den Schaltenteilen erzeugen. Dabei ist die Spannkraftrichtung im wesentlichen im gleichen Abstand zwischen den zwei Durchgängen vorzugsweise auf einer Radialmittelachse der Halterung ausgerichtet.

Vorzugsweise ist die Spannrichtung eine Schraube, die sich durch ein Loch in einem Schalenteil hindurch erstreckt und spannend mit dem anderen Schalenteil in Eingriff kommt. Die Schraube liegt etwa in gleichem Abstand zu den beiden axialen Durchgängen windschief zu deren Axialrichtung.

Weitere Eigenschaften, Vorteile und Merkmale der Erfindung werden durch die folgende Beschreibung einer bevorzugten Ausführung der Erfindung anhand der beiliegenden Zeichnungen deutlich, in denen zeigen:
- Figur 1: eine perspektivische Ansicht der erfindungsgemäßen Haltevorrichtung von oben;
- Figur 2: eine perspektivische Ansicht der Haltevorrichtung gemäß Figur 1 von unten;
- Figur 3a: eine perspektivische Ansicht eines oberen Schalenteils mit Elastomerteil innerhalb der Vorrichtung gemäß den Figuren 1 und 2; und
- Figur 3b: eine perspektivische Ansicht eines unteren Schalenteils mit Elastomerteil.

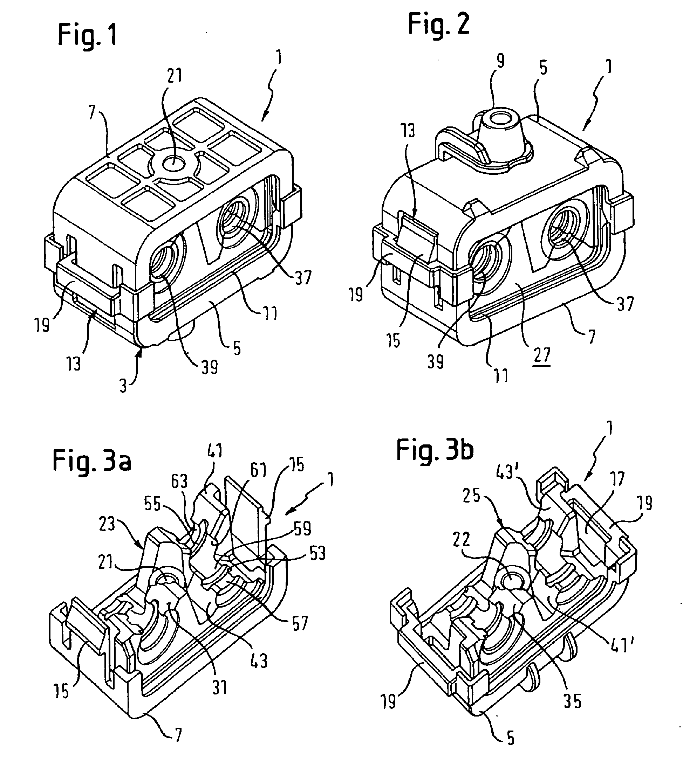

In den Figuren 1 bis 3 ist die erfindungsgemäße schwingungsentkoppelnde Haltevorrichtung im allgemeinen mit der Bezugsziffer 1 versehen.

Die Haltevorrichtung 1 besteht aus einem hülsenförmigen Rahmen 3, dessen Hülsenform im Querschnitt rechteckig mit abgerundeten Ecken ist und zwei offene Seiten 11 aufweist. Der Rahmen 3 besteht aus zwei im wesentlichen gleich dimensionierten Schalenhälften, nämlich einer unteren Schalenhälfte 5 und einer oberen Schalenhälfte 7. Die untere Schalenhälfte ist mit einem Flanschanschluß 9 versehen, über den die Haltevorrichtung 1 an eine nicht dargestellte Fahrzeugkarosserie befestigt werden kann.

Der Rahmen 3 bildet im zusammengebauten Zustand der Schalenhälften 5, 7 eine radial umlaufende Hülse mit den zwei sich gegenüberliegenden offenen axialen Seiten 11, durch die hindurch zwei nicht dargestellte Hydraulikleitungen eines ARS-Systems eines Kraftfahrzeugs durchlaufen.

An geschlossenen Kurzseiten des Rahmens 3 ist jeweils eine Schnappeinrichtung 13 vorgesehen, die einen aus einem Stück mit der oberen Schalenhälfte 7 gefestigten Schnapphaken 15 und eine Schnappaufnahme 17 an der unteren Schalenhälfte 5 aufweist. Beim Aneinanderfiigen der Schalenhälften 5, 7 werden die Schnapphaken 15 beim ersten Eingriff mit einer Halterippe 19 der unteren Schalenhälfte 5 elastisch aufeinanderzu verbogen, um anschließend bei einem weiteren Vorschub in die Aufnahme 17 schnappend einzugreifen, wie in den Figuren 1 und 2 dargestellt ist.

Die obere Schalenhälfte 7 umfaßt an einer Längsseite des Rahmens zentral ein Loch 21, das mit einem Loch 23 in der unteren Schalenhälfte 5 fluchtet. Zum zusätzlichen Verspannen der beiden Schalenhälften 5, 7 können durch die Löcher 21, 23 eine Klemmschraube eingesetzt werden, um die beiden Schalenhälften 5, 7 zu verspannen.

In jeder Schalenhälfte 5, 7 ist ein Elastomerkörperteil 23, 25 eingesetzt, das der Innenfläche des Schalenteils zugewandt formkomplementär ausgebildet ist.

Die Haltevorrichtung 1 besteht neben dem Rahmen 3 auch noch aus einer Elastomerkörpereinheit 27, die ausschließlich durch die beiden Elastomerkörperteile 23, 25 gebildet ist.

Wie in den Figuren 3a und 3b gezeigt ist, sind die Elastomerkörperteile 23, 25 im wesentlichen identisch geformt und bilden jeweils eine Trennfugenfläche 33, 35, welche Trennfugenflächen im aneinandergefügten Zustand der Elastomerkörperteile 23, 25 aneinanderliegen, um die unter Umständen vorgespannte Elastomerkörpereinheit 27 zu bilden.

Die Elastomerkörpereinheit 27 umfaßt zwei Durchgänge 37, 39, durch die hindurch die nicht dargestellten Hydraulikleitungen geführt sind. Erfindungsgemäß werden die Durchgänge 37, 39 durch beide Elastomerkörperteile 23, 25 begrenzt.

Wie in den Figuren 3a und 3b gezeigt ist, münden die Trennfugenflächen 33, 35 im gesamten axialen Verlauf der Durchgänge 37, 39 quer radial an der Wand der Durchgänge.

Dabei ist jedes Elastomerkörperteil 23, 25 für jeden Durchgang in einem ersten Axialabschnitt 41 und in einem dazu umfangsversetzt, axial anschließenden zweiten Axialabschnitt 43 unterteilt. Bei dem Elastomerkörperteil 23 des oberen Schalenteils 7 stellt der erste Axialabschnitt 41 etwa 75 % des Materials zur Bildung des Durchgangs zur Verfiigung, wobei der formkomplementär, im zusammengefügten Zustand gegenüberliegende, erste Axialabschnitt 41' des Elastomerkörperteils 25 der unteren Schalenhälfte 5 nur 25 % des Materials ausbildet, das auch den Durchgang 37 begrenzt.

Die Trennfugenfläche 33, 35 am axialen Übergang zwischen dem ersten Axialabschnitt 41, 41' und dem zweiten axialen Abschnitt 43, 43' verläuft im wesentlichen rein radial. Insofern umgreift das Elastomerkörperteil 23 der oberen Schalenhälfte 7 mit dessen ersten Axialabstand 41 die nicht dargestellte Hydraulikleitung in einem Umfangsbereich von etwa 270°, während der zugeordnete erste Axialabschnitt 41' des Elastomerkörperteils 23 der unteren Schalenhälfte 7 die Hydraulikleitung nur mit 90° umgreift.

Wie aus den Figuren 3a und 3b ersichtlich ist, sind die Trennfugenflächen 31, 35 zu einer Mittelachse, die die Löcher 23, 21 zentral durchdringt, punktsymmetrisch geformt. Aufgrund des identischen, formkomplementären Aufbaus der Fügeflächen, liegen diese im aneiandergefügten Zustand der Schalenhälften 5, 7 vollständig aneinander. Der Elastomerkörper 27 ist im wesentlichen etwas größer ausgeführt als der von den Schalenhälften 5, 7 begrenzte Raum, so daß im aneinander gefügten Zustand die Elastomerkörpereinheit 27 komprimiert ist.

Jeder Axialabschnitt umfaßt eine kreisabschnittsförmige Ringnut 53, 55, welche axial dazu benachbarte Greiflippen 57, 59 bzw. 61, 63 definieren.

Es sei angemerkt, daß die Schalenhälften 5, 7 jeweils aus einer starren Kunststoffwerkstoff einstückig gefertigt sind.

### Bezugszeichenliste

- 1: Haltevorrichtung
- 3: Rahmen
- 5, 7: Schalenhälften
- 9: Flanschanschluß
- 11: offene axiale Seiten
- 13: Schnappeinrichtung
- 15: Schnapphaken
- 17: Schnappaufnahme
- 19: Halterippe
- 21, 23: Löcher
- 23,25: Elastomerkörperteil
- 27: Elastomerkörpereinheit
- 33,35: Trennfugenwände
- 37,39: Durchgänge
- 41, 41': erster Axialabschnitt
- 43, 43': zweiter Axialabschnitt
- 53, 55: Ringnut
- 57,59,61,63: Greiflippen

## Patentansprüche

1. Vorrichtung zum Halten wenigstens eines langgestreckten Bauteils, wie eines Rohrs insbesondere eines Hydrauliksystems, an einer im Betrieb Schwingungen ausgesetzten Tragstruktur, wie einer Fahrzeug-Karosserie, bestehend aus einem umlaufenden Rahmen (3), der zwei Schalenteile aufweist, von denen eine an der Tragstruktur befestigbar ist und die zur Bildung des Rahmens (3) fest aneinander fügbar sind, und einer Elastomerkörpereinheit (27), die wenigstens einen axialen Durchgang (37, 39) zur Aufnahme des langgestreckten Bauteils definiert, von dem Rahmen (3) in Radialrichtung umgeben ist und zu deren Bildung jedes Schalenteil ein Elastomerteil (23, 25) aufnimmt, wobei der Durchgang (37, 39) im Verlauf dessen gesamten Axialrichtung von den wenigstens beiden Elastomerteilen im aneinander gefügten Zustand der zwei Schalenteile begrenzt ist, **dadurch gekennzeichnet, dass** das eine Elastomerteil einen ersten Axialabschnitt (41, 41') des Durchgangs (37, 39) in einem Umfangsbereich von mindestens bis 210° bis 330° und einen zweiten Axialabschnitt (43, 43') in einem Umfangsbereich von 30° bis 150° bildet, wobei das andere Elastomerteil den ersten Axialabschnitt (41, 41') des Durchgangs (37, 39) in einem Umfangsbereich von mindestens bis 30° bis 150° und den zweiten Axialabschnitt (43, 43') in einem Umfangsbereich von 210° bis 330° bildet.

2. Vorrichtung zum Halten wenigstens eines langgestreckten Bauteils, wie eines Rohrs insbesondere eines Hydrauliksystems, an einer im Betrieb Schwingungen ausgesetzten Tragstruktur, wie einer Fahrzeug-Karosserie, bestehend aus einem umlaufenden Rahmen (3), der zwei Schalenteile aufweist, von denen eine an der Tragstruktur befestigbar ist und die zur Bildung des Rahmens (3) fest aneinander fügbar sind, und einer Elastomerkörpereinheit (27), die wenigstens einen axialen Durchgang (37, 39) zur Aufnahme des langgestreckten Bauteils definiert, von dem Rahmen (3) in Radialrichtung umgeben ist und zu deren Bildung jedes Schalenteil ein Elastomerteil (23, 25) aufnimmt, wobei der Durchgang (37, 39) im Verlauf dessen gesamten Axialrichtung von den wenigstens beiden Elastomerteilen im aneinander gefügten Zustand der zwei Schalenteile begrenzt ist, wobei sich in Umfangsrichtung des Durchgangs (37, 39) aneinander liegende Ränder einer Grenzfuge der Elastomerteile (23, 25) längs des gesamten Durchgangs (37, 39) erstrecken, **dadurch gekennzeichnet, dass** die Ränder eines ersten Axialabschnitts (41, 41') des Durchgangs (37, 39) umfangsversetzt zu den Rändern eines zweiten an den ersten Axialabschnitt (41, 41') axial anschließenden Axialabschnitts (43, 43') verlaufen.

3. Vorrichtung nach Anspruch 1 oder 2, bei der die Elastomerteile (23, 25) jeweils eine Fügefläche (31, 35) aufweisen und die Fügeflächen (31, 35) im aneinander gefügten Zustand der Schalenteile formkomplementär aneinander liegen.

4. Vorrichtung nach einem der Ansprüche 1 bis 3, bei der die Elastomerteile (23, 25) im aneinander gefügten Zustand der Schalenteile eine Grenzfuge definieren, die sich quer durch die Elastomerkörpereinheit (27) erstreckt, wobei insbesondere die Grenzfuge an zwei Wandstellen des Durchgangs (37, 39) mündet, wobei vorzugsweise die beiden Wandstellen des Durchgangs (37, 39) in einem Umfangsabstand von weniger als 180° liegen, vorzugsweise zwischen 30 und 150°.

5. Vorrichtung nach einem der Ansprüche 1 bis 4, bei der der Durchgang (37, 39) zumindest abschnittsweise von einem der beiden Elastomerteile (23, 25) dominant begrenzt ist.

6. Vorrichtung nach einem der Ansprüche 1 bis 5, bei der das eine Elastomerteil den ersten Axialabschnitt (41, 41') des Durchgangs (37, 39) in einem Umfangsbereich von 270°, und den zweiten Axialabschnitt (43, 43') in einem Umfangsbereich von 90° bildet, wobei das andere Elastomerteil den ersten Axialabschnitt (41, 41') des Durchgangs (37, 39) in einem Umfangsbereich von 90° und den zweiten Axialabschnitt (43, 43') in einem Umfangsbereich 270° bildet.

7. Vorrichtung nach einem der Ansprüche 1 bis 6, bei der die Ränder eines ersten Axialabschnitts (41, 41') des Durchgangs (37, 39) diametral umfangsversetzt zu den Rändem eines zweiten an den ersten Axialabschnitt (41, 41') axial anschließenden Axialabschnitts (43, 43') verlaufen, wobei insbesondere die Ränder im Verlauf des ersten und/oder des zweiten Axialabschnitts (43, 43') im wesentlichen axial verlaufen.

8. Vorrichtung nach Anspruch 7, bei der die Ränder im Verlauf eines den ersten und den zweiten Axialabschnitt (41, 41', 43, 43') verbindenden Übergangsabschnitts eine erheblich größere Radialrichtungskomponente als eine Axialrichtungskomponente aufweist.

9. Vorrichtung nach einem der Ansprüche 6 bis 8, bei der zumindest ein Axialabschnitt (41, 41', 43, 43') des Durchgangs mit wenigstens einer Ringnut (53, 55) zur Bildung wenigstens zweier durch die Ringnut (53, 55) axial begrenzter ringförmiger Haltelippen (59 - 63) zum Umgreifen des langgestreckten Bauteils versehen ist, die insbesondere von beiden Elastomerteilen (23, 25) gebildet sind.

10. Vorrichtung nach einem der Ansprüche 1 bis 9, bei der in der Elastomerkörpereinheit (27) zwei im wesentlich parallele axiale Durchgänge (37, 39) ausgebildet sind, wobei insbesondere eine Trennfugenfläche (31, 35) zwischen den Elastomerteilen (23, 25) zu einer radialen Mittelachse der Halterung, welche Mittelachse windschief zwischen beiden Durchgängen (37, 39) verläuft, punktsymmetrisch geformt ist, wobei die zugeordnete Trennfugenfläche (31, 35) des anderen Elastomerteils (23, 25) spiegelsymmetrisch dazu gebildet ist.

11. Vorrichtung nach einem der Ansprüche 1 bis 10, bei der die Schalenteile lösbar aneinander befestigt sind.

12. Vorrichtung nach einem der Ansprüche 1 bis 11, bei der ein Schnappmechanismus (13) zum Befestigen der Schalenteile aneinander vorgesehen ist, wobei insbesondere der Schnappmechanismus (13) ein elastisch verformbares Eingriffsteil, das an einem Schalenteil befestigt ist, und eine Aufnahme (17) aufweist, in die das Eingriffsteil zum Befestigen der Schalenteile lösbar schnappen kann.

13. Vorrichtung nach einem der Ansprüche 1 bis 12, bei der der Rahmen (3) im wesentlichen eine Quaderform mit zwei in Axialrichtung offene Seiten (11) aufweist, durch die sich das wenigstens eine langgestreckte, in dem wenigstens einen Durchgang (37, 39) aufgenommene Bauteil hindurch erstreckt, wobei insbesondere jeweils ein Schnappmechanismus (13) auf zwei insbesondere geschlossenen, sich gegenüberliegenden Rahmenseiten angeordnet ist.

14. Vorrichtung nach einem der Ansprüche 1 bis 13, bei der eine Spanneinrichtung die beiden aneinander gefügten Schalenteile vorgesehen ist, wobei insbesondere die Spanneinrichtung Spannkräfte windschief zur Längsachse des Durchgangs (37, 39) zwischen den Schalenteilen erzeugt, insbesondere im gleichen Abstand zwischen zwei Durchgängen (37, 39) vorzugsweise auf einer Radialmittelachse der Haltevorrichtung (1).

15. Vorrichtung nach Anspruch 14, bei der die Spanneinrichtung eine Schraube ist, die sich durch ein Loch (21) in einem Schalenteil hindurch erstreckt und spannend mit dem anderen Schalenteil in Eingriff kommt.

## Claims

1. A device for holding at least one elongate component, such as a pipe in particular of a hydraulic system on a supporting structure which is exposed to vibrations during operation, such as a vehicle body, consisting of an encircling frame (3) which has two shell parts, one of which is able to be fastened to the supporting structure, and which are able to be joined securely to one another to form the frame (3), and an elastomer body unit (27) which defines at least one axial passage (37, 39) to receive the elongate component, is surrounded by the frame (3) in radial direction and for the formation of which each shell part receives an elastomer part (23, 25), wherein the passage (37, 39) in the course of its entire axial direction is delimited by the at least two elastomer parts in the state of the two shell parts when joined to one another, **characterized in that** the one elastomer part forms a first axial section (41, 41') of the passage (37, 39) in a peripheral range of at least 210° to 330° and a second axial section (43, 43') in a peripheral range of 30° to 150°, wherein the other elastomer part forms the first axial section (41, 41') of the passage (37, 39) in a peripheral range of at least 30° to 150° and the second axial section (43, 43') in a peripheral range of 210° to 330°.

2. The device for holding at least one elongate component, such as a pipe in particular of a hydraulic system, on a supporting structure which is exposed to vibrations during operation, such as a vehicle body, consisting of an encircling frame (3) which has two shell parts, one of which is able to be fastened to the supporting structure, and which are able to be joined securely to one another to form the frame (3), and an elastomer body unit (27) which defines at least one axial passage (37, 39) to receive the elongate component, is surrounded by the frame (3) in radial direction and for the formation of which each shell part receives an elastomer part (23, 25), wherein the passage (37, 39) in the course of its entire axial direction is delimited by the at least two elastomer parts in the state of the two shell parts when joined to one another, wherein in peripheral direction of the passage (37, 39) edges, lying adjacent to one another, of a boundary joint of the elastomer parts (23, 25) extend along the entire passage (37, 39), **characterized in that** the edges of a first axial section (41, 41') of the passage (37, 39) run peripherally offset to the edges of a second axial section (43, 43') axially adjoining the first axial section (41, 41').

3. The device according to Claim 1 or 2, in which the elastomer parts (23, 25) respectively have a joint area (31, 35) and the joint areas (31, 35) lie adjacent to one another in a complementary manner with regard to shape in the state of the shell parts when joined to one another.

4. The device according to one of Claims 1 to 3, in which the elastomer parts (23, 25) in the state of the shell parts when joined to one another define a boundary joint which extends transversely through the elastomer body unit (27), wherein in particular the boundary joint opens at two wall sites of the passage (37, 39), wherein preferably the two wall sites of the passage (37, 39) lie at a peripheral distance of less than 180°, preferably between 30 and 150°.

5. The device according to one of Claims 1 to 4, in which the passage (37, 39) is delimited in a dominant manner at least partially by one of the two elastomer parts (23, 25).

6. The device according to one of Claims 1 to 5, in which the one elastomer part forms the first axial section (41, 41') of the passage (37, 39) in a peripheral range of 270°, and the second axial section (43, 43') in a peripheral range of 90°, wherein the other elastomer part forms the first axial section (41, 41') of the passage (37, 39) in a peripheral range of 90° and the second axial section (43, 43') in a peripheral range of 270°.

7. The device according to one of Claims 1 to 6, in which the edges of a first axial section (41, 41') of the passage (37, 39) run in a diametrically peripherally offset manner to the edges of a second axial section (43, 43') axially adjoining the first axial section (41, 41'), wherein in particular the edges run substantially axially in the course of the first and/or of the second axial section (43, 43').

8. The device according to Claim 7, in which the edges in the course of a transition section connecting the first and the second axial section (41, 41', 43, 43') have a considerably greater radial direction component than an axial direction component.

9. The device according to one of Claims 6 to 8, in which at least one axial section (41, 41', 43, 43') of the passage is provided with at least one annular groove (53, 55) for the formation at least of two annular holding lips (59 - 63), axially delimited by the annular groove (53, 55), for encompassing the elongate component, which are formed in particular from two elastomer parts (23, 25).

10. The device according to one of Claims 1 to 9, in which two substantially parallel axial passage (37, 39) are formed in the elastomer body unit (27), wherein in particular a joint surface (31, 35) between the elastomer parts (23, 25) is shaped point-symmetrically to a radial central axis of the mounting, which central axis runs skew between the two passages (37, 39), wherein the associated joint surface (31, 35) of the other elastomer part (23, 25) is formed in mirror symmetry thereto.

11. The device according to one of Claims 1 to 10, in which the shell parts are fastened detachably to one another.

12. The device according to one of Claims 1 to 11, in which a snap mechanism (13) is provided for fastening the shell parts to one another, wherein in particular the snap mechanism (13) is an elastically deformable engagement part which is fastened to a shell part and has a mount (17) into which the engagement part can snap detachably for fastening the shell parts.

13. The device according to one of Claims 1 to 12, in which the frame (3) has substantially a rectangular block shape with two open sides (11) in axial direction, through which the at least one elongate component extends, received in the at least one passage (37, 39), wherein in particular respectively a snap mechanism (13) is arranged on two, in particular closed, frame sides lying opposite one another.

14. The device according to one of Claims 1 to 13 in which a clamping device is provided for the two shell parts which are joined to one another, wherein in particular the clamping device generates clamping forces skew to the longitudinal axis of the passage (37, 39) between the shell parts, in particular at an equal distance between two passages (37, 39) preferably on a radial central axis of the holding device (1).

15. The device according to Claim 14, in which the clamping device is a screw which extends through a hole (21) in a shell part and comes into engagement in a clamping manner with the other shell part.

## Revendications

1. Dispositif pour maintenir au moins un composant étiré en longueur, tel qu'un tuyau en particulier d'un système hydraulique, sur une structure portante exposée à des vibrations pendant le fonctionnement, telle qu'une carrosserie de véhicule, comprenant un cadre (3) périphérique, qui présente deux parties de coque, dont une peut être fixée sur la structure portante et lesquelles peuvent être assemblées fixement l'une à l'autre pour former le cadre (3) et une unité de corps en élastomère (27), qui définit au moins un passage (37, 39) axial pour le logement du composant étiré en longueur, est entourée par le cadre (3) dans le sens radial et pour la formation de laquelle chaque partie de coque reçoit une partie en élastomère (23, 25), le passage (37, 39) étant limité dans le tracé de l'ensemble de sa direction axiale par les au moins deux parties en élastomère lorsque les deux parties de coque sont assemblées l'une à l'autre, **caractérisé en ce que** l'une des parties en élastomère forme un premier tronçon axial (41, 41') du passage (37, 39) dans une zone périphérique d'au moins jusqu'à 210° à 330° et un second tronçon axial (43, 43') dans une zone périphérique de 30° à 150°, l'autre partie en élastomère formant le premier tronçon axial (41, 41') du passage (37, 39) dans une zone périphérique d'au moins jusqu'à 30° à 150° et le second tronçon axial (43, 43') dans une zone périphérique de 210° jusqu'à 330°.

2. Dispositif pour maintenir au moins un composant étiré en longueur, tel qu'un tuyau en particulier d'un système hydraulique, sur une structure portante exposée à des vibrations pendant le service, telle qu'une carrosserie de véhicule, comprenant un cadre (3) périphérique, qui présente deux parties de coque, dont l'une peut être fixée sur la structure portante et lesquelles peuvent être assemblées fixement l'une à l'autre pour former le cadre (3), et une unité à corps en élastomère (27), qui définit au moins un passage (37, 39) axial pour le logement du composant étiré en longueur, est entouré par le cadre (3) dans le sens radial et pour la formation de laquelle chaque partie de coque reçoit une partie en élastomère (23, 25),le passage (37, 39) étant limité dans le tracé de sa direction axiale globale par les au moins deux parties en élastomère lorsque les deux parties de coque sont assemblées, des bords, se touchant dans le sens périphérique du passage (37, 39), d'un joint limite des parties en élastomère (23, 25) s'étendant le long de l'ensemble du passage (37, 39), **caractérisé en ce que** les bords d'un premier tronçon axial (41, 41') du passage (37, 39) sont agencés de façon décalée en périphérie par rapport aux bords d'un second tronçon axial (43, 43') se raccordant axialement au premier tronçon axial (41, 41').

3. Dispositif selon la revendication 1 ou 2 sur lequel les parties en élastomère (23, 25) présentent chacune une surface d'assemblage (31, 35) et les surfaces d'assemblage (31, 35) sont contigües par complémentarité de formes lorsque les parties de coque sont assemblées l'une à l'autre.

4. Dispositif selon l'une des revendications 1 à 3, sur lequel les parties en élastomère (23, 25) définissent, lorsque les parties de coque sont assemblées l'une à l'autre, un joint limite qui s'étend transversalement à travers l'unité à corps en élastomère (27), en particulier le joint limite débouchant sur deux parties de paroi du passage (37, 39), les deux parties de paroi du passage (37, 39) étant disposées de préférence à une distance périphérique de moins de 180°, de préférence entre 30 et 150°.

5. Dispositif selon l'une des revendications 1 à 4, sur lequel le passage (37, 39) est limité pour l'essentiel au moins par endroits par l'une des deux parties en élastomère (23, 25).

6. Dispositif selon l'une des revendications 1 à 5, sur lequel l'une des parties en élastomère forme le premier tronçon axial (41, 41') du passage (37, 39) dans une zone périphérique de 270°, et le second tronçon axial (43, 43') dans une zone périphérique de 90°, l'autre partie en élastomère formant le premier tronçon axial (41, 41'), du passage (37, 39) dans une zone périphérique de 90° et le second tronçon axial (43, 43') dans une zone périphérique de 270°.

7. Dispositif selon l'une des revendications 1 à 6, sur lequel les bords d'un premier tronçon axial (41, 41') du passage (37, 39) sont agencés de façon diamétralement décalée en périphérie par rapport aux bords d'un second tronçon axial (43, 43') se raccordant axialement au premier tronçon axial (41, 41'), en particulier les bords étant agencés principalement axialement dans le tracé du premier et/ou du second tronçon axial (43, 43').

8. Dispositif selon la revendication 7, sur lequel les bords présentent dans le tracé d'un tronçon de transition reliant le premier et le second tronçons axiaux (41, 41', 43, 43') une composante de direction radiale nettement plus grande qu'une composante de direction radiale.

9. Dispositif selon l'une des revendications 6 à 8, sur lequel au moins un tronçon axial (41, 41', 43, 43') du passage est doté d'au moins une rainure annulaire (53, 55) pour la formation d'au moins deux lèvres de retenue (59 - 63) de forme annulaire, limitées axialement par la rainure annulaire (53, 55) pour l'enveloppement du composant étiré en longueur, lesquelles lèvres sont formées en particulier par les deux parties en élastomère (23, 25).

10. Dispositif selon l'une des revendications 1 à 9, sur lequel deux passages (37, 39) axiaux et sensiblement parallèles sont formés dans l'unité à corps en élastomère (27), en particulier une surface de joint de séparation (31, 35) étant formée à symétrie ponctuelle entre les parties en élastomère (23, 25) par rapport à un axe médian radial du support, lequel axe médian est agencé de façon inclinée entre les deux passages (37, 39), la surface de joint de séparation (31, 35) associée de l'autre partie en élastomère (23, 25) étant formée avec une symétrie spéculaire par rapport à cela.

11. Dispositif selon l'une des revendications 1 à 10, sur lequel les parties de coque sont fixées les unes aux autres de façon amovible.

12. Dispositif selon l'une des revendications 1 à 11, sur lequel un mécanisme d'encliquetage (13) est prévu pour la fixation des parties de coque les unes aux autres, en particulier le mécanisme d'encliquetage (13) présentant une partie d'engagement élastiquement déformable, qui est fixée sur une partie de coque, et un logement (17), dans lequel la partie d'engagement peut s'encliqueter de façon amovible pour la fixation de parties de coque.

13. Dispositif selon l'une des revendications 1 à 12, sur lequel le cadre (3) présente pour l'essentiel une forme de parallélépipède avec deux côtés (11) ouverts dans le sens axial, à travers lesquels le au moins un composant étiré en longueur, réceptionné dans le au moins un passage (37, 39), s'étend, en particulier un mécanisme d'encliquetage (13) étant disposé à chaque fois sur deux côtés de cadre en particulier fermés, se faisant face.

14. Dispositif selon l'une des revendications 1 à 13, sur lequel un dispositif de serrage pour les deux parties de coque assemblées l'une à l'autre est prévu, en particulier le dispositif de serrage générant des forces de serrage de façon inclinée par rapport à l'axe longitudinal du passage (37, 39) entre les parties de coque, en particulier à la même distance entre deux passages (37, 39) de préférence sur un axe médian radial du dispositif de retenue (1).

15. Dispositif selon la revendication 14, sur lequel le dispositif de serrage est une vis qui s'étend à travers un trou (21) dans une partie de coque et vient en prise par serrage avec l'autre partie de coque.
